# EUROPÄISCHE PATENTSCHRIFT

(11) **EP 0 920 684 B1**
(45) Veröffentlichungstag und Bekanntmachung des Hinweises auf die Patenterteilung: **15.03.2000**
(21) Anmeldenummer: 97934420.7
(22) Anmeldetag: 14.07.1997
(51) Int. Cl.: G06K 19/07, G07F 7/10

(54) **CHIPKARTE MIT PERSONALISIERUNGSSPEICHER UND VERFAHREN ZUM EIN- UND AUSGEBEN VON DATEN**
CHIP CARD WITH A PERSONALIZATION MEMORY AND A PROCESS FOR THE INPUT AND OUTPUT OF DATA
CARTE A PUCE AVEC MEMOIRE DE PERSONNALISATION ET PROCEDE POUR L'ENTREE ET LA SORTIE DE DONNEES

(30) Priorität: 23.08.1996 DE 19634064
(43) Veröffentlichungstag der Anmeldung: 09.06.1999
(73) Patentinhaber: ROBERT BOSCH GMBH, 70442 Stuttgart (DE)
(72) Erfinder: GROEGER, Klaus-Erwin, D-31199 Diekholzen (DE)
(86) Internationale Anmeldenummer: DE9701478
(87) Internationale Veröffentlichungsnummer: WO9808199

(56) Entgegenhaltungen:
- EP-A- 0 337 185
- DE-A- 4 419 805

## Beschreibung

### Stand der Technik

Die Erfindung geht aus von einer Chipkarte mit Speicher sowie einem Verfahren zum Ein- und Ausgeben von Daten nach der Gattung der unabhängigen Ansprüche.

In zunehmendem Maße werden Chipkarten zum Einsatz gebracht. Eine Chipkarte ist üblicherweise eine Plastikkarte, in die ein Mikrochip eingebettet ist. Für viele Anwendungen ist hinsichtlich ihrer Größe eine standardisierte Chipkarte vorgesehen. Im wesentlichen sind zwei Arten von Karten bekannt, nämlich die Speicher- und die Prozessorchipkarte. Die Speicherchipkarte ist zumindest mit einem Speicherchip ausgestattet und in der Prozessorchipkarte ist zusätzlich ein Prozessorchip enthalten. Eine solche Chipkarte ist aus dem Artikel "Rechengenie in der Plastikkarte", T. Wille, Funkschau 7/1993 bekannt. Es wird hier eine intelligente Speicherchipkarte vorgesehen, wobei Sicherheitsfunktionen durch den integrierten Prozessor realisiert sind. Die Speicherkarten sind ganz oder teilweise mit Kenntnis ihres Busformates auslesbar. Karten, bei denen ein Controller vorgeschaltet ist, sind mit Kenntnissen des Betriebssystems und speziellen Algorithmen lesbar. Um die große Zahl von Karten zu unterscheiden, werden diese von den Herausgebern oftmals durch Bedrucken kenntlich gemacht. Die Zugehörigkeit einer Karte zu einer Person wird durch einen Aufdruck oder eine erhabene Prägung des Namens oder durch die Wiedergabe eines Photos dokumentiert. Darüber hinaus existieren eine Vielzahl von Karten, die keine "Personalisierung" aufweisen, daher völlig anonym sind. Im Fall des Verlustes einer solchen Karte ist die Zuordnung zum Besitzer oftmals nur vom Herausgeber und unter großem technischen Aufwand möglich, da die Karte nicht auf einfache Weise ausgelesen werden kann.

In der DE-A-44 19 805 ist ein Datenträger beschrieben, der einem speziellen Verfahren zur Echtheitsprüfung unterzogen werden kann. Der beschriebene Datenträger verfügt dazu über wenigstens einen integrierten Schaltkreis mit Speichereinheiten und Logikeinheiten bzw. einen Mikroprozessor und weiterhin über eine Schaltung zum Senden bzw. Empfangen von Daten. Außerdem ist der Datenträger mit einer in Hardware realisierten individuellen Kennung versehen, die zum Beispiel beim Herstellungsvorgang des integrierten Schaltkreises durch Zünden von Sicherungen als Hardware-Merkmal für die spezielle Schaltung des integrierten Schaltkreises realisiert ist. Durch Verknüpfen extern zugeführter Daten mit der individuellen Kennung ist die Echtheit des Datenträgers überprüfbar.

### Vorteile der Erfindung

Die erfindungsgemäße Chipkarte mit den kennzeichnenden Merkmalen des unabhängigen Anspruchs hat demgegenüber den Vorteil, daß sie zusätzlich zu den in den bekannten Chipkarten vorhandenen Speichern einen Speicherbereich aufweist, in dem Daten zur Identifizierung des Benutzers abgelegt werden. Dadurch werden die Daten, die über den Sicherheitsstandard der Karte geschützt werden, von den Daten getrennt, die öffentlich zugänglich sein sollen und die Personalisierung beinhalten. Zudem entfällt das Bedrucken oder Prägen der Karte.

Durch die in den Unteransprüchen aufgeführten Maßnahmen ist eine vorteilhafte Weiterbildung und Verbesserung der im unabhängigen Anspruch angegebenen Chipkarte möglich.

Besonders vorteilhaft ist es, wenn der zusätzliche Speicherbereich ein Teil des Speichers ist, der bereits auf der Karte vorhanden ist. Dieser Teil des Speichers muß allerdings als getrennter Speicherbereich ausgewiesen sein, da er nicht der Kontrollfunktion des Mikroprozessors unterliegen soll. Weiterhin ist es von Vorteil, den Speicher als getrenntes Bauteil auf der Karte einzubauen.

Das erfindungsgemäße Verfahren zum Ein- und Auslesen von Daten nach den kennzeichnenden Merkmalen des unabhängigen Anspruchs hat den Vorteil, daß die Daten, die in zusätzlichen Speicher abgelegt wurden, unter Umgehung des Betriebssystems des Mikroprozessors ausgegeben und eingelesen werden können. Damit ist es in einfacher Weise möglich, über ein externes Terminal die Daten auf die Karte zu schreiben, die der Benutzer selbst von sich öffentlich machen möchte.

### Zeichnung

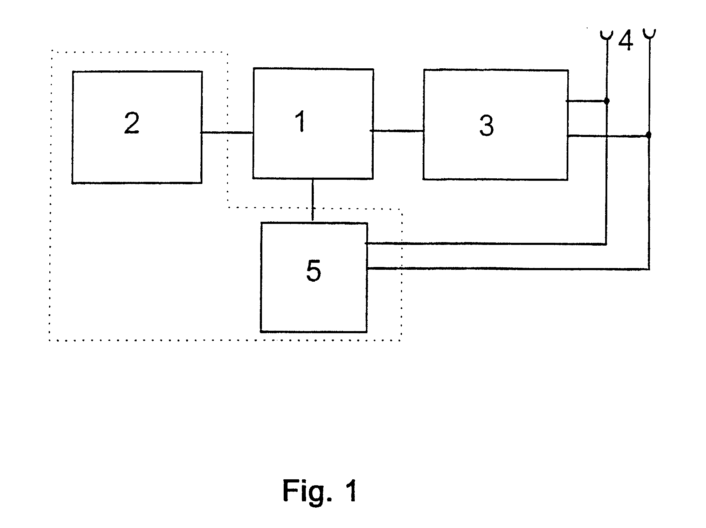

Ein Ausführungsbeispiel der Erfindung ist in der Zeichnung dargestellt und in der nachfolgenden Beschreibung näher erläutert. Es zeigt Figur 1 schematisch den Aufbau einer erfindungsgemäßen Chipkarte.

### Beschreibung des Ausführungsbeispiels

In Figur 1 ist schematisch eine Chipkarte dargestellt, deren Kern ein Mikroprozessor 1 ist. Dieser Mikroprozessor ist mit einer Speichereinheit 2 verbunden, in die Programme und Daten gespeichert werden. Über die Ein-/Ausgabeeinheit 3 werden die Informationen aus dem Speicher 2 an die Kontakte 4 ausgegeben oder von dort aufgenommen. Als zusätzliches Bauelement wird in der erfindungsgemäßen Chipkarte ein zusätzlicher Speicher 5 integriert, in dem die personalisierten Daten abgelegt werden können. Dieser Speicher 5 wird nicht vom üblichen Sicherheitsstandard der Karte abgedeckt. Es ist ein spezieller, frei zugänglicher Speicherbereich, der nicht mit speziellen Schlüsseln über einen Datenbus oder ein Betriebssystem angesprochen werden muß. Dieser spezielle Speicher 5 kann physikalisch als zusätzlicher Speicherbaustein ausgeführt sein, oder aber unter Umgehung des Betriebssystems als Teilbereich des Programm- und Datenspeichers 2 zugänglich sein. Jeder Benutzer entscheidet selbst, welche Daten im Zusatzspeicher 5 abgelegt werden. Der Benutzer kann dabei persönliche Daten, aber auch einen Blutgruppennachweis, einen Wunsch als Organspender behandelt zu werden sowie Hinweise auf Krankheiten bzw. auf zu verständigende Personen eingeben. Die Eingabe der Personalisierungsdaten erfolgt über einfache Terminals, die nichts mit der eigentlichen Funktion der Chipkarte zu tun haben müssen. Die Chipkarte selbst enthält äußerlich keine Hinweise mehr auf den Besitzer. Beim Verlust einer solchen Karte kann der Finder über ein einfaches Terminal jederzeit die Personalisierungsdaten auslesen, so daß eine Rückführung einfach möglich wird.

## Patentansprüche

1. Chipkarte mit einem auf der Karte befindlichen Mikroprozessor (1) und einem mit diesem verbundenen Speicher (2) für Programme und/oder Daten, einer Ein/Ausgabeeinheit (3), die die Informationen in Anschlußkontakte (4) abgibt bzw. aufnimmt, sowie einem zusätzlichen Speicher (5), dadurch gekennzeichnet, daß der zusätzliche Speicher (5) für jeden editierbar ist, und daß der zusätzliche Speicher (5) zur Aufnahme von Daten zur Identifizierung des Benutzters vorgesehen ist.

2. Chipkarte nach Anspruch 1, dadurch gekennzeichnet, daß der zusätzliche Speicher (5) physikalisch ein Teil des Speicherbausteins (2) ist.

3. Chipkarte nach Anspruch 1, dadurch gekennzeichnet, daß der zusätzliche Speicher (5) ein getrenntes Bauelement ist.

4. Verfahren zum Auslesen und Einlesen von Daten, die auf einer Chipkarte mit einem Mikroprozesser (1) und einem Speicher (2) für Programme und Daten, einer Ein/Ausgabeeinheit (3) sowie einem zusätzlichen Speicher (5) gespeichert sind, dadurch gekennzeichnet, daß der zusätzliche Speicher (5) unter Umgehung des Betriebssystems des Mikroprozessors ausgelesen bzw. beschrieben werden kann.

5. Verfahren zum Aus- und Einlesen von Daten nach Anspruch 4, dadurch gekennzeichnet, daß die Daten des zusätzlichen Speichers (5) über ein Eingabe-/Ausgabegerät gelesen bzw. geschrieben werden können.

## Claims

1. Chip card having a microprocessor (1) located on the card and a memory (2), connected to said microprocessor, for programs and/or data, an input/output unit (3) which outputs or accepts the information at connection contacts (4), and an additional memory (5), characterized in that the additional memory (5) can be edited by anyone, and in that the additional memory (5) is provided to hold data for identifying the user.

2. Chip card according to Claim 1, characterized in that the additional memory (5) is physically part of the memory module (2).

3. Chip card according to Claim 1, characterized in that the additional memory (5) is a separate component.

4. Process for reading out and reading in data which are stored on a chip card having a microprocessor (1) and a memory (2) for programs and data, an input/output unit (3) and an additional memory (5), in which the personalized data can be deposited, characterized in that the additional memory (5) can be read out or written whilst circumventing the operating system of the microprocessor.

5. Process for reading out and reading in data according to Claim 4, characterized in that the data in the additional memory (5) can be read or written via an input/output device.

## Revendications

1. Carte à puces comprenant un microprocesseur (1) se trouvant sur la carte et une mémoire (2),reliée à celui-ci, pour des programmes et ou des données, une unité d'entrée/sortie (3), qui délivre les informations à des contacts de raccordement ou les recueille, ainsi qu'une mémoire additionnelle (5),
caractérisée en ce que
- la mémoire additionnelle (5) peut être éditée pour chacun, et
- la mémoire additionnelle (5) est prévue pour recevoir des données servant à identifier son utilisateur.

2. Carte à puce, selon la revendication 1,
caractérisée en ce que
la mémoire additionnelle (5) fait physiquement partie d'un bloc de mémoire (2).

3. Carte à puce, selon la revendication 1,
caractérisée en ce que
la mémoire additionnelle (5) est un composant séparé.

4. Procédé pour lire et enregistrer des données, qui sont mises en mémoire sur une carte à puce comprenant un microprocesseur (1) et une mémoire (2), pour des programmes et des données, une unité d'entrée/sortie (3), ainsi qu'une mémoire additionnelle (5),
caractérisé en ce qu'
on peut exploiter ou décrire la mémoire additionnelle (5), en contournant le système de fonctionnement du microprocesseur.

5. Procédé servant à extraire et entrer des données selon la revendication 4,
caractérisé en ce qu'
on peut lire ou décrire les données de la mémoire additionnelle (5) au moyen d'un appareil d'entrée/sortie.
